**Europäisches Patentamt**

**European Patent Office**

**Office européen des brevets**

(19)

(11) Veröffentlichungsnummer: **0 277 550**
**B1**

(12) **EUROPÄISCHE PATENTSCHRIFT**

(45) Veröffentlichungstag der Patentschrift:
04.04.90

(51) Int. Cl.⁴: **B60R 22/20**

(21) Anmeldenummer: **88100833.8**

(22) Anmeldetag: **21.01.88**

(54) Sicherheitsgurt für Kraftfahrzeuge.

(30) Priorität: **24.01.87  DE 3702150**

(43) Veröffentlichungstag der Anmeldung:
**10.08.88 Patentblatt 88/32**

(45) Bekanntmachung des Hinweises auf die Patenterteilung:
**04.04.90 Patentblatt 90/14**

(84) Benannte Vertragsstaaten:
**DE GB SE**

(56) Entgegenhaltungen:
**DE-A- 2 522 415**
**FR-A- 2 353 419**
**FR-A- 2 369 950**

(73) Patentinhaber: **TIBBE KG, Waldstrasse 2,
D-8065 Erdweg(DE)**

(72) Erfinder: **Reese, Karl-Heinz, Buchenweg 35,
D-8031 Eichenau(DE)**

(74) Vertreter: **Oedekoven, Wolf-Dieter, Dipl. Ing.,
Erhardtstrasse 8/V, D-8000 München 5(DE)**

## Beschreibung

Die Erfindung bezieht sich auf einen Sicherheitsgurt für Kraftfahrzeuge der im Oberbegriff des Patentanspruchs 1 angegebenen Gattung.

Derartige Kraftfahrzeug-Sicherheitsgurte sind bekannt. Dabei ist als Übersetzunsvorrichtung ein Schwenkhebel vorgesehen, welcher zwischen dem Kraftfahrzeugsitz und dem Kraftfahrzeugboden angeordnet ist, quer zum Kraftfahrzeugsitz verläuft und an den beiden Enden jeweils um eine kraftfahrzeugfeste Achse schwenkbar gelagert bzw. mit dem Kraftfahrzeugsitz verbunden ist, zwischen denen das sitzseitige Ende des flexiblen Zuggliedes am Schwenkhebel befestigt ist (FR-A 2 353 419). Der Umlenkbeschlag kann einen in der dem Kraftfahrzeugsitz benachbarten B-Säule des Kraftfahrzeugs mittels des Zuggliedes entgegen der Wirkung einer Zugfeder verstellbaren Schlitten und eine Arretiereinrichtung für denselben aufweisen, nämlich einen Sperrkeil und einen Betätigungskeil zur Bewegung des Sperrkeils im Schlitten entgegen der Wirkung einer Federbelastung derart, daß eine Verzahnung des Sperrkeils in eine entsprechende Verzahnung der B-Säule eingreift, was dann geschieht, wenn der Betätigungskeil, an welchem eine mit einem Querschlitz zur Aufnahme des Gurtbandes versehene Lasche des Umlenkbeschlages um eine zur Bewegungsrichtung des Schlittens senkrechte Achse schwenkbar gelagert ist, sich infolge einer entsprechenden Zugbelastung des Gurtbandes im Schlitten nach unten auf den Sperrkeil zu bewegt (FR-A 2 369 950). Statt des Schwenkhebels hat man auch schon einen in der B-Säule angeordneten Flaschenzug als Übersetzungsvorrichtung zwischen dem Kraftfahrzeugsitz und dem Umlenkbeschlag bzw. dessen Schlitten verwendet.

Bekannt ist ferner ein passiver Sicherheitsgurt für Kraftfahrzeuge mit einer auf der einen Seite des zugehörigen Kraftfahrzeugsitzes am Kraftfahrzeugboden befestigten Aufwickelvorrichtung für das Gurtband und einem am freien Gurtbandende angebrachten Läufer, welcher auf der anderen Seite des Kraftfahrzeugsitzes entlang einer kraftfahrzeugfesten, oberhalb der dem Sitz benachbarten Kraftfahrzeugtür verlaufenden und sich bis zu einer Arretiervorrichtung für den Läufer erstreckenden Führung zwischen zwei Stellungen verschiebbar ist, in denen das Gurtband vom Kraftfahrzeugsitz entfernt bzw. an den Insassen angelegt ist, welcher auf dem Sitz Platz genommen hat. Zum Gurtbandanlegen wird der Läufer beim Schließen der Kraftfahrzeugtür mittels eines Antriebsmotors entgegen der Wirkung einer Rückholfeder von dem der Arretiervorrichtung abgewandten Ende der Führung zur Arretiervorrichtung geschoben, um darin zu verrasten. Beim neuerlichen Öffnen der Kraftfahrzeugtür wird die Rückholfeder wirksam, um den Läufer wieder in die ursprüngliche Stellung zu verschieben, so daß das Gurtband den Insassen freigibt. Der Läufer ist mittels je zwei Zugseilen über je eine Übersetzungsvorrichtung mit dem Antriebsmotor und der Rückholfeder verbunden, welche den Verstellweg des Läufers vergrößert und von einer um eine kraftfahrzeugfeste Achse drehbar gelagerten Rolle mit zwei Abschnitten größeren bzw. kleineren Durchmessers zum Auf- und Abwickeln des am Läufer befestigten Zugseils bzw. des an den Antriebsmotor bzw. die Rückholfeder angeschlossenen Zugseils gebildet ist (DE-A 2 522 415).

Der Erfindung liegt die Aufgabe zugrunde, einen Sicherheitsgurt für Kraftfahrzeuge der im Oberbegriff des Patentanspruchs 1 angegebenen Gattung zu schaffen, bei welchem die zwischen dem Kraftfahrzeugsitz und dem Umlenkbeschlag vorgesehene Übersetzungsvorrichtung zur Verringerung des Verstellweges des Umlenkbeschlages außerordentlich einfach aufgebaut ist und außergewöhnlich wenig Platz beansprucht.

Diese Aufgabe ist durch die im kennzeichnenden Teil des Patentanspruchs 1 angegebenen Merkmale gelöst. Vorteilhafte Ausgestaltungen des erfindungsgemäßen Kraftfahrzeug-Sicherheitsgurtes sind in den Unteransprüchen 2 und 3 angegeben.

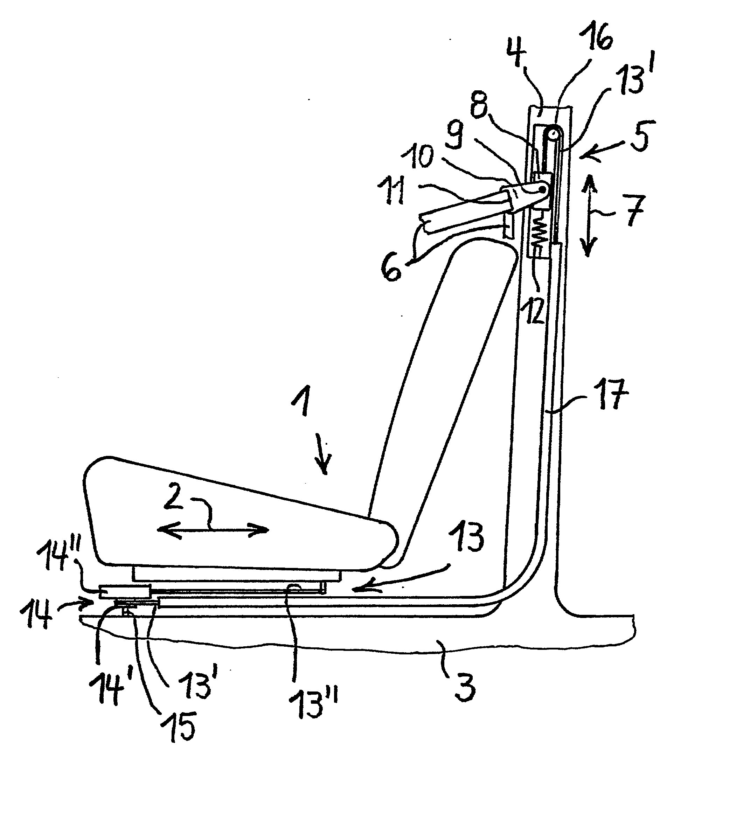

Nachstehend ist eine Ausführungsform des erfindungsgemäßen Sicherheitsgurtes für Kraftfahrzeuge anhand einer Zeichnung beispielsweise beschrieben, deren einzige Figur schematisch die Anordnung in einem Kraftfahrzeug in Verbindung mit dem zugehörigen Kraftfahrzeugsitz veranschaulicht.

Der Kraftfahrzeugsitz 1 ist in Richtung des Doppelpfeils 2 auf dem Kraftfahrzeugboden 3 verstellbar. An der B-Säule 4 des Kraftfahrzeugs ist ein Umlenkbeschlag 5 für das Gurtband 6 des dem Kraftfahrzeugsitz 1 zugeordneten Dreipunktsicherheitsgurtes angebracht, welches den Umlenkbeschlag 5 umschlingt und sich von demselben einerseits entlang der B-Säule 4 nach unten zu einem nicht dargestellten Aufrollautomaten hin und andererseits bei angelegtem Sicherheitsgurt über den auf dem Kraftfahrzeugsitz 1 befindlichen Insassen erstreckt, um diesen insbesondere bei einem Unfall auf dem Kraftfahrzeugsitz 1 zu halten, wobei der Umlenkbeschlag 5 in Richtung des Doppelpfeils 7 verstellbar ist, und zwar simultan mit dem Kraftfahrzeugsitz 1, so daß jeder Position des letzteren in Kraftfahrzeuglängsrichtung eine bestimmte Höhe des Umlenkbeschlags 5 über dem Kraftfahrzeugboden 3 entspricht.

Der Umlenkbeschlag 5 weist einen an der B-Säule 4 in Richtung des Doppelpfeils 7 gleitend geführten Schlitten 8 und eine an demselben um eine Achse 9 schwenkbar gelagerte Lasche 10 mit einem Querschlitz 11 auf, durch welchen das Gurtband 6 hindurchläuft. Der Schlitten 8 ist einerseits durch eine Zugfeder 12 mit der B-Säule 4 und andererseits durch ein flexibles Zugglied 13 mit dem Kraftfahrzeugsitz 1 verbunden, welches aus einem ersten Zuggliedteil 13' und einem zweiten Zuggliedteil 13" besteht, die jeweils mit einem Ende am Schlitten 8 bzw. am Kraftfahrzeugsitz 1 befestigt sind. Am Kraftfahrzeugboden 3 ist eine Rolle 14 mit einem Abschnit 14' kleineren Durchmessers und einem Abschnitt 14" größeren Durchmessers angeordnet, welche auf einer von Kraftfahrzeugboden 3 senkrecht nach oben ragenden Achse 15 drehbar gelagert ist. Am Abschnitt 14' kleineren Durchmessers ist das zweite Ende des ersten Zuggliedteils 13' befestigt, um auf denselben aufgewickelt und von demselben abgewickelt zu werden, an Abschnitt 14" größeren Durchmessers das zweite Ende des zweiten Zuggliedteils 13".

Wenn der Kraftfahrzeugsitz 1 in Richtung des Doppelpfeils 2 beispielsweise nach rechts verschoben wird, dann wickelt sich das zweite Zuggliedteil 13" in entsprechendem Ausmaß vom Abschnitt 14" größeren Durchmessers der Rolle 14 ab, welche also um einen entsprechenden Winkel gedreht wird. Dieses hat zur Folge, daß das erste Zuggliedteil 13' auf den Abschnitt 14' kleineren Durchmessers der Rolle 14 aufgewickelt und der Umlenkbeschlag 5 bzw. dessen Schlitten 8 entgegen der Wirkung der Zugfeder 12 in Richtung des Doppelpfeils 7 nach oben gezogen wird, und zwar in einem solchen Ausmaß, wie dem Drehwinkel der Rolle 14 und dem kleineren Durchmesser von deren Abschnitt 14' entspricht. Die Rolle 14 stellt also eine Übersetzungsvorrichtung dar, deren Übersetzungsverhältnis dem gegenseitigen Verhältnis der Durchmesser ihrer beiden Abschnitte 14" und 14' entspricht. Es wird so gewählt, wie für den jeweils vorgegebenen Verstellbereich des Kraftfahrzeugsitzes 1 und den jeweils vorgegebenen Verstellbereich des Umlenkbeschlags 5 erforderlich. Wenn bei spielsweise für den Kraftfahrzeugsitz 1 ein Verstellbereich von 240 mm und für den Umlenkbeschlag 5 ein Verstellbereich von 80 mm vorgesehen sind, dann muß die Übersetzungsvorrichtung ein Übersetzungsverhältnis von 3 : 1 gewährleisten und müssen die Durchmesser der beiden Abschnitte 14" sowie 14' der Rolle 14 in entsprechendem Verhältnis zueinander stehen, welche zugleich sozusagen als Umlenkrolle für das gesamte flexible Zugglied 13 wirkt, analog einer Umlenkrolle 16 an der B-Säule 4 oberhalb des Schlittens 8 auf dessen der Zugfeder 12 abgewandten Seite, über welche das erste Zuggliedteil 13' läuft, das sich durch ein kraftfahrzeugfestes Rohr 17 hindurcherstreckt.

Der Umlenkbeschlag 5 weist ferner einer nicht dargestellte Arretiereinrichtung für den Schlitten 8 auf, welche die insbesondere bei einem Unfall über die Lasche 10 auf den Schlitten 8 bei angelegtem Sicherheitsgurt einwirkenden Kräfte aufnimmt, so daß das flexible Zugglied 13 bzw. die beiden Zuggliedteile 13' und 13" davon entlastet sind.

Abwandlungen von der dargestellten und geschilderten Ausführungsform sind möglich. So kann beispielsweise die Anordnung der Rollen 14 und 16 vertauscht werden, also die Rolle 14 an der B-Säule 4 und die Rolle 16 am Kraftfahrzeugboden 3 angeordnet werden. Darüberhinaus ist es auch möglich, die Erfindung bei Sicherheitsgurten mit einem höhenverstellbaren Befestigungsbeschlag für das Gurtband zuwirklichen.

## Patentansprüche

1. Sicherheitsgurt für Kraftfahrzeuge mit in Kraftfahrzeuglängsrichtung verstellbaren Sitzen, welcher einen kraftfahrzeugfesten Umlenkbeschlag (5) für das Gurtband (6) aufweist, der zur selbsttätigen Einstellung seiner Höhe über dem Kraftfahrzeugboden (3) entsprechend der jeweiligen Position des zugehörigen Kraftfahrzeugsitzes (1) mittels eines am Sitz befestigten flexiblen Zuggliedes (13) über eine Übersetzungsvorrichtung entgegen der Wirkung einer Federbelastung (12) senkrecht verstellbar ist, dadurch **gekennzeichnet**, daß das Zugglied (13) aus zwei gesonderten Zuggliedteilen (13', 13") besteht und die Übersetzungsvorrichtung von einer um eine kraftfahrzeugfeste Achse (15) drehbar gelagerten Rolle (14) mit zwei Abschnitten (14', 14") kleineren bzw. größeren Durchmessers zum Auf- und Abwickeln des am Umlenkbeschlag (5) bzw. des am Kraftfahrzeugsitz (1) befestigten Zuggliedteil (13' bzw. 13") gebildet ist.

2. Sicherheitsgurt nach Anspruch 1, dadurch **gekennzeichnet**, daß die Rolle (14) am Kraftfahrzeugboden (3) angeordnet ist.

3. Sicherheitsgurt nach Anspruch 1, dadurch **gekennzeichnet**, daß die Rolle (14) an der dem Kraftfahrzeugsitz (1) benachbarten B-Säule (4) des Kraftfahrzeugs angeordnet ist.

## Claims

1. Safety seat belt for motor vehicles with seats which are adjustable in the direction of the length of the vehicle, comprising a guiding anchorage (5) for the belt (6), secured to the vehicle and adjustable vertically against the action of spring loading (12) for automatic adjustment of its height above the floor (3) of the vehicle in accordance with the current position of the associated vehicle seat (1) by means of a flexible tension member (13) secured on the seat, through a ratio-changing device, characterised in that the tension member (13) comprises two separate tension member portions (13', 13") and the ratio-changing device is formed by a roller (14) mounted to rotate about a spindle (15) secured to the vehicle, with two portions (14', 14") of smaller and larger diameters for taking up and unwinding the portions (13' and 13") of the tension member attached to the anchorage (5) and to the vehicle seat (1).

2. Safety belt according to claim 1 characterised in that the roller (14) is mounted on the floor (3) of the vehicle.

3. Safety belt according to claim 1 characterised in that the roller (14) is mounted on the B-post (4) of the motor vehicle adjacent to the vehicle seat (1).

## Revendications

1. Ceinture de sécurité pour véhicules automobiles comportant des sièges réglables dans la direction de la longueur du véhicule automobile, ladite ceinture présentant une armature de renvoi (5) solidaire du véhicule automobile pour la sangle (6), qui est réglable verticalement en vue du positionnement automatique de sa hauteur par rapport à la carrosserie (3) du véhicule automobile conformément à la position respective du siège (1) du véhicule automobile associé, au moyen d'un élément de traction (13) flexible, fixé au siège, par l'intermédiaire d'un dispositif de transmission à l'encontre de l'action d'une charge élastique (12), caractérisée par le fait que l'élément de traction (13) se compose de deux parties d'élément de traction séparées (13', 13"), et que le dispositif de transmission est formé d'un rouleau (14) monté à rotation autour d'un axe (15) solidaire du véhicule automobile et comportant deux sections (14', 14") de diamètre respectivement inférieur ou supérieur pour enrouler et dérouler la partie d'élément de traction (13', resp. 13") fixée respectivement à l'armature de renvoi (5) ou au siège (1) du véhicule automobile.

2. Ceinture de sécurité selon la revendication 1, caractérisée par le fait que le rouleau (14) est monté sur la carrosserie (3) du véhicule automobile.

3. Ceinture de sécurité selon la revendication 1, caractérisée par le fait que le rouleau (14) est monté sur la colonne B (4) du véhicule automobile qui est contiguë au siège (1) du véhicule automobile.